(19) 

**Europäisches Patentamt**

**European Patent Office**

**Office européen des brevets**

(11) **EP 4 618 501 A1**

(12) **EUROPEAN PATENT APPLICATION**
published in accordance with Art. 153(4) EPC

(43) Date of publication:
**17.09.2025   Bulletin 2025/38**

(21) Application number: **23915349.7**

(22) Date of filing: **12.01.2023**

(51) International Patent Classification (IPC):
**H04L 45/02** (2022.01)    **G06N 20/00** (2019.01)
**H04W 40/00** (2009.01)

(52) Cooperative Patent Classification (CPC):
**G06N 20/00; H04L 45/02; H04W 40/00**

(86) International application number:
**PCT/CN2023/071948**

(87) International publication number:
**WO 2024/148579 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **WANG, Fei
Shenzhen, Guangdong 518129 (CN)**

• **PENG, Chenghui
Shenzhen, Guangdong 518129 (CN)**
• **ZHAO, Mingyu
Shenzhen, Guangdong 518129 (CN)**
• **LIU, Zhe
Shenzhen, Guangdong 518129 (CN)**
• **WANG, Jun
Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND APPARATUS**

(57)     A communication method and apparatus are providedrelate to the field of communication technologies, and can perform AI-based processing on a functional feature of a network node, to implement model training and inference between network nodes in a communication network. The method includes: A first node sends a first request, where the first request is used to request node information of one or more nodes, and the one or more nodes are nodes in a node set associated with the first node. The first node obtains the node information of the one or more nodes, determines a next-hop node of the first node from the one or more nodes based on the node information, and sends an updated first model of the first node to the next-hop node.

FIG. 2

FIG. 3

EP 4 618 501 A1

**Description**

**TECHNICAL FIELD**

Embodiments of this application relate to the field of communication technologies, and in particular, to a communication method and apparatus.

**BACKGROUND**

With continuous development of communication technologies, continuous attempts start to be made to combine an artificial intelligence (artificial intelligence, AI) technology with a communication network, so as to implement model training and inference over the communication network. For example, research on supporting AI by using a network data analytics function (network data analytics function, NWDAF) is started from R16. For another example, in a radio access network 3 (radio access network 3, RAN3), a model training and inference framework is researched based on load balancing, mobility, and network energy saving.

For each network node in the communication network, continuous attempts are made to perform AI-based processing on a functional feature of the network node to replace original implementation with various AI algorithms, so as to adapt to increasingly complex scenario cases.

However, there is still a lack of extensive research on how to perform AI-based processing on a functional feature of a network node to implement model training and inference between network nodes in the communication network.

**SUMMARY**

Embodiments of this application provide a communication method and apparatus, to perform AI-based processing on a functional feature of a network node, so as to implement model training and inference between network nodes in a communication network.

According to a first aspect, an embodiment of this application provides a communication method. The method includes: A first node sends a first request, where the first request is used to request node information of one or more nodes, and the one or more nodes are nodes in a node set associated with the first node. The first node obtains the node information of the one or more nodes, determines a next-hop node of the first node from the one or more nodes based on the node information, and sends an updated first model of the first node to the next-hop node.

Based on the first aspect, the first node may determine the next-hop node independently based on the obtained node information, and a node selection mechanism that is applicable to model training and that can be implemented in a wireless network is provided. The mechanism can be used to determine a model transmission path for the model training, and is applicable to a completely self-organizing manner. This reduces management and control complexity, and is more flexible.

In a possible design, that a first node sends a first request includes: The first node sends the first request to one or more second nodes, where the second node is a neighboring node of the first node in the node set. The first node receives node information from the one or more second nodes.

Based on the possible design, the first node may search second nodes with a small range for the next-hop node. Because the second node is the neighboring node of the first node, a delay in obtaining the node information by the first node can be shortened, so that the first node quickly determines the next-hop node, and a processing delay is shortened.

In a possible design, that a first node sends a first request includes: The first node sends the first request to a third node, where the third node is a control node of the node set. The first node receives node information from one or more fourth nodes, where the fourth node is a node in the node set.

Based on the possible design, the first node may alternatively send the first request to the third node, to search a node set with a large range for the next-hop node, to improve a success rate of node selection.

In a possible design, that the first node sends the first request to a third node includes: If a second node meets a first condition, the first node sends the first request to the third node. The second node is a neighboring node of the first node in the node set, and the first condition includes one or more of the following: being traversed, a data distribution correlation with the first node is less than or equal to a first threshold, a distance to the first node is greater than or equal to a second threshold, a power for connection to the first node is less than or equal to a third threshold, and a computing power is less than or equal to a fourth threshold.

Based on the possible design, when the first node cannot determine the next-hop node from second nodes, the first node may send the first request to the third node, to search a node set with a larger range for the next-hop node, to improve the success rate of node selection.

In a possible design, the first request includes event information, and the event information indicates to update the first model.

Based on the possible design, a node may be notified, by carrying the event information, that a current event is updating the first model.

In a possible design, the first request further includes a destination address of the first node.

Based on the possible design, the destination address of the first node is carried, so that a node that receives the first request can send the node information to the first node based on the destination address of the first node.

In a possible design, the node information includes one or more of the following: first indication information, degree information, data distribution information, computing power information, and channel state information, where the first indication information indicates whether a node is traversed.

Based on the possible design, a plurality of feasible solutions are provided for designing the node information.

In a possible design, the next-hop node is a node that is not traversed in the one or more nodes; the next-hop node is a node having a highest data distribution correlation with the first node in the one or more nodes; the next-hop node is a node closest to the first node in the one or more nodes; the next-hop node is a node connected to the first node at a highest power in the one or more nodes; the next-hop node is a node with a highest computing power in the one or more nodes; or the next-hop node is any one of the one or more nodes.

Based on the possible design, a plurality of feasible solutions are provided for the first node to determine the next-hop node.

According to a second aspect, an embodiment of this application provides a communication method. The method may include: A third node receives a first request from a first node, where the third node is a control node of a node set associated with the first node, the first request is used to request node information of one or more nodes, the one or more nodes are nodes in the node set, and the node information is used by the first node to determine a next-hop node of the first node. The third node sends the first request to one or more fourth nodes, where the fourth node is a node in the node set.

Based on the second aspect, the third node forwards the first request of the first node to a node in the node set, so that the first node can obtain node information of each node in the node set, and then determine a next-hop node independently based on the obtained node information. A node selection mechanism that is applicable to model training and that can be implemented in a wireless network is provided. The mechanism can be used to determine a model transmission path for the model training, and is applicable to a completely self-organizing manner. This reduces management and control complexity, and is more flexible.

In a possible design, the first request includes event information, and the event information indicates to update a first model.

Based on the possible design, a node may be notified, by carrying the event information, that a current event is updating the first model.

In a possible design, the first request further includes a destination address of the first node.

Based on the possible design, the destination address of the first node is carried, so that a node that receives the first request can send the node information to the first node based on the destination address of the first node.

In a possible design, the node information includes one or more of the following: first indication information, degree information, data distribution information, computing power information, and channel state information, where the first indication information indicates whether a node is traversed.

Based on the possible design, a plurality of feasible solutions are provided for designing the node information.

According to a third aspect, an embodiment of this application provides a communication method. The method may include: A third node obtains node information of a plurality of nodes in a node set, where the third node is a control node of the node set. The third node determines a transmission path based on the node information of the plurality of nodes. The third node sends path information to a node associated with the transmission path, where the path information indicates the transmission path.

Based on the third aspect, the third node may determine a complete transmission path of a first model based on node information of each node in the node set. This is applicable to a scenario in which a plurality of nodes uniformly train a same model, and can perform model convergence more efficiently.

In a possible design, the node information includes one or more of the following: first indication information, degree information, data distribution information, computing power information, and channel state information, where the first indication information indicates whether a node is traversed.

Based on the possible design, a plurality of feasible solutions are provided for designing the node information.

In a possible design, that the third node sends path information to a node associated with the transmission path includes: The third node sends the path information to a 1st node of the transmission path, where the path information indicates each node associated with the transmission path and a next-hop node of each node.

Based on the possible design, the third node may send the path information only to the 1st node of the transmission path, to reduce signaling overheads of the third node.

In a possible design, that the third node sends path information to a node associated with the transmission path includes: The third node sends the path information to each node associated with the transmission path, where the path information indicates a next-hop node of a node associated with the path information.

Based on the possible design, the third node may alternatively send the path information to each node associated with the transmission path, so that each node determines a next-hop node of the node.

According to a fourth aspect, an embodiment of this application provides a communication method. The method may include: A fourth node sends node information to a third node, where the fourth node is a node in a node set, and the third node is a control node of the node set. The fourth node receives path information from the third node, where the path information indicates a transmission path, and the transmission path is determined based on the node information.

Based on the fourth aspect, the fourth node sends the node information to the third node, so that the third node can determine a complete transmission path of a first model based on node information of each node in the node set. This is applicable to a scenario in which a plurality of nodes uniformly train a same model, and can perform model convergence more efficiently.

In a possible design, the node information includes one or more of the following: first indication information, degree information, data distribution information, computing power information, and channel state information, where the first indication information indicates whether a node is traversed.

Based on the possible design, a plurality of feasible solutions are provided for designing the node information.

In a possible design, if the fourth node is a 1st node of the transmission path, the path information indicates each node associated with the transmission path and a next-hop node of each node.

Based on the possible design, the third node may send the path information only to the 1st node of the transmission path, to reduce signaling overheads of the third node.

In a possible design, the fourth node removes information associated with the fourth node from the path information, to obtain new path information, where the new path information is obtained through the removal; and the fourth node sends the new path information to a next-hop node of the fourth node.

Based on the possible design, when receiving the path information sent by the third node, the 1st node of the transmission path may further remove information associated with the 1st node from the path information, to obtain new path information, where the new path information is obtained through the removal; and send the new path information to a next-hop node of the 1st node, to implement sequential path information transmission between nodes associated with the transmission path, and ensure that each node associated with the transmission path can determine a next-hop node of the node.

In a possible design, the path information indicates a next-hop node of the fourth node.

Based on the possible design, the third node may alternatively send the path information to each node associated with the transmission path, so that each node determines a next-hop node of the node.

According to a fifth aspect, an embodiment of this application provides a communication method. The method may include: A third node receives a second request from a first node and an updated first model of the first node, where the third node is a control node of a node set associated with the first node, and the second request is used to request to forward the updated first model of the first node. The third node obtains node information of one or more fourth nodes, where the fourth node is a node in the node set. The third node determines a next-hop node based on the node information of the one or more fourth nodes, and sends the updated first model of the first node to the next-hop node.

Based on the fifth aspect, when receiving the second request of the first node and the updated first model of the first node, the third node may determine a next-hop node based on node information of each node in the node set, and forward the updated first model of the first node to the next-hop node. This provides a node selection mechanism that is applicable to model training and that can be implemented in a wireless network, and a model transmission path may be determined for the model training.

In a possible design, the node information includes one or more of the following: first indication information, degree information, data distribution information, computing power information, and channel state information, where the first indication information indicates whether a node is traversed.

Based on the possible design, a plurality of feasible solutions are provided for designing the node information.

In a possible design, before the third node obtains the node information of the one or more fourth nodes, the method further includes: The third node sends a first request to the one or more fourth nodes, where the first request is used to request to obtain the node information.

Based on the possible design, the third node may send the first request to the fourth node, to obtain the node information of the fourth node.

In a possible design, the first request includes event information, and the event information indicates to update the first model.

Based on the possible design, a node may be notified, by carrying the event information, that a current event is updating the first model.

In a possible design, the first request further includes a destination address of the first node.

Based on the possible design, the destination address of the first node is carried, so that a node that receives the first request can send the node information to the first node based on the destination address of the first node.

According to a sixth aspect, an embodiment of this application provides a communication apparatus. The communication apparatus may be used in the first node in the first aspect or the possible designs of the first aspect, to implement functions performed by the first node. The communication apparatus may be the first node, or may be a chip, a system on chip, or the like that is configured to implement the functions of the first node. The communication apparatus may implement, by executing corresponding software by hardware, the functions performed by the first node. The hardware or the software includes one or more modules corresponding to the functions, for example, a transceiver module and a processing module. The transceiver module is configured to send a first request, where the first request is used to request node information of one or more nodes, and the one or more nodes are nodes in a node set associated with the first node. The transceiver module is further configured to obtain the node information of the one or more nodes. The processing module is configured to determine a next-hop node of the first node from the one or more nodes based on the node information. The transceiver module is further configured to send an updated first model of the first node to the next-hop node.

In a possible design, the transceiver module is specifically configured to send the first request to one or more second nodes, where the second node is a neighboring node of the first node in the node set. The transceiver module is further configured to receive node information from the one or more second nodes.

In a possible design, the transceiver module is specifically configured to send the first request to a third node, where the third node is a control node of the node set. The transceiver module is further specifically configured to receive node information from one or more fourth nodes, where the fourth node is a node in the node set.

In a possible design, the transceiver module is specifically configured to: if a second node meets a first condition, send the first request to the third node, where the second node is a neighboring node of the first node in the node set, and the first condition includes one or more of the following: being traversed, a data distribution correlation with the first node is less than or equal to a first threshold, a distance to the first node is greater than or equal to a second threshold, a power for connection to the first node is less than or equal to a third threshold, and a computing power is less than or equal to a fourth threshold.

In a possible design, the first request includes event information, and the event information indicates to update the first model.

In a possible design, the first request further includes a destination address of the first node.

In a possible design, the node information includes one or more of the following: first indication information, degree information, data distribution information, computing power information, and channel state information, where the first indication information indicates whether a node is traversed.

In a possible design, the next-hop node is a node that is not traversed in the one or more nodes; the next-hop node is a node having a highest data distribution correlation with the first node in the one or more nodes; the next-hop node is a node closest to the first node in the one or more nodes; the next-hop node is a node connected to the first node at a highest power in the one or more nodes; the next-hop node is a node with a highest computing power in the one or more nodes; or the next-hop node is any one of the one or more nodes.

It should be noted that for a specific implementation of the communication apparatus in the sixth aspect, refer to behavior functions of the first node in the communication method provided in any one of the first aspect or the possible designs of the first aspect.

According to a seventh aspect, an embodiment of this application provides a communication apparatus. The communication apparatus may be used in the third node in the second aspect or the possible designs of the second aspect, to implement functions performed by the third node. The communication apparatus may be the third node, or may be a chip, a system on chip, or the like that is configured to implement the functions of the third node. The communication apparatus may implement, by executing corresponding software by hardware, the functions performed by the third node. The hardware or the software includes one or more modules corresponding to the functions, for example, a transceiver module and a processing module. The transceiver module is configured to receive a first request from a first node, where the third node is a control node of a node set associated with the first node, the first request is used to request node information of one or more nodes, the one or more nodes are nodes in the node set, and the node information is used by the first node to determine a next-hop node of the first node. The transceiver module is further configured to send the first request to one or more fourth nodes, where the fourth node is a node in the node set.

In a possible design, the first request includes event information, and the event information indicates to update a first model.

In a possible design, the first request further includes a destination address of the first node.

In a possible design, the node information includes one or more of the following: first indication information, degree information, data distribution information, computing power information, and channel state information, where the first indication information indicates whether a node is traversed.

It should be noted that for a specific implementation of the communication apparatus in the seventh aspect, refer to behavior functions of the third node in the communication method provided in any one of the second aspect or the possible designs of the second aspect.

According to an eighth aspect, an embodiment of this application provides a communication apparatus. The communication apparatus may be used in the third node in the third aspect or the possible designs of the third aspect, to implement functions performed by the third node. The communication apparatus may be the third node, or may be a chip, a system on chip, or the like that is configured to implement the functions of the third node. The communication apparatus may implement, by executing corresponding software by hardware, the functions performed by the third node. The hardware or the software includes one or more modules corresponding to the functions, for example, a transceiver module and a processing module. The transceiver module is configured to obtain node information of a plurality of nodes in a node set, where the third node is a control node of the node set. The processing module is configured to determine a transmission path based on the node information of the plurality of nodes. The transceiver module is further configured to send path information to a node associated with the transmission path, where the path information indicates the transmission path.

In a possible design, the node information includes one or more of the following: first indication information, degree information, data distribution information, computing power information, and channel state information, where the first indication information indicates whether a node is traversed.

In a possible design, the transceiver module is specifically configured to send the path information to a $1^{st}$ node of the transmission path, where the path information indicates each node associated with the transmission path and a next-hop node of each node.

In a possible design, the transceiver module is specifically configured to send the path information to each node associated with the transmission path, where the path information indicates a next-hop node of a node associated with the path information.

It should be noted that for a specific implementation of the communication apparatus in the eighth aspect, refer to behavior functions of the third node in the communication method provided in any one of the third aspect or the possible designs of the third aspect.

According to a ninth aspect, an embodiment of this application provides a communication apparatus. The communication apparatus may be used in the fourth node in the fourth aspect or the possible designs of the fourth aspect, to implement functions performed by the fourth node. The communication apparatus may be the fourth node, or may be a chip, a system on chip, or the like that is configured to implement the functions of the fourth node. The communication apparatus may implement, by executing corresponding software by hardware, the functions performed by the fourth node. The hardware or the software includes one or more modules corresponding to the functions, for example, a transceiver module and a processing module. The transceiver module is configured to send node information to a third node, where the fourth node is a node in a node set, and the third node is a control node of the node set. The transceiver module is further configured to receive path information from the third node, where the path information indicates a transmission path, and the transmission path is determined based on the node information.

In a possible design, the node information includes one or more of the following: first indication information, degree information, data distribution information, computing power information, and channel state information, where the first indication information indicates whether a node is traversed.

In a possible design, if the fourth node is a $1^{st}$ node of the transmission path, the path information indicates each node associated with the transmission path and a next-hop node of each node.

In a possible design, the processing module is configured to remove information associated with the fourth node from the path information, to obtain new path information, where the new path information is obtained through the removal; and the transceiver module is further configured to send the new path information to a next-hop node of the fourth node.

In a possible design, the path information indicates a next-hop node of the fourth node.

It should be noted that for a specific implementation of the communication apparatus in the ninth aspect, refer to behavior functions of the fourth node in the communication method provided in any one of the fourth aspect or the possible designs of the fourth aspect.

According to a tenth aspect, an embodiment of this application provides a communication apparatus. The communication apparatus may be used in the third node in the fifth aspect or the possible designs of the fifth aspect, to implement functions performed by the third node. The communication apparatus may be the third node, or may be a chip, a system on chip, or the like that is configured to implement the functions of the third node. The communication apparatus may implement, by executing corresponding software by hardware, the functions performed by the third node. The hardware or the software includes one or more modules corresponding to the functions, for example, a transceiver module and a processing module. The transceiver module is configured to receive a second request from a first node and an updated first model of the first node, where the third node is a control node of a node set associated with the first node, and the second request is used to request to forward the updated first model of the first node. The transceiver module is further configured to obtain node information of one or more fourth nodes, where the fourth node is a node in the node set. The processing module is configured to determine a next-hop node based on the node information of the one or more fourth nodes. The transceiver module is further configured to send the updated first model of the first node to the next-hop node.

In a possible design, the node information includes one or more of the following: first indication information, degree information, data distribution information, computing power information, and channel state information, where the first indication information indicates whether a node is traversed.

In a possible design, the transceiver module is further configured to send a first request to the one or more fourth nodes, where the first request is used to request to obtain the node information.

In a possible design, the first request includes event information, and the event information indicates to update the first model.

In a possible design, the first request further includes a destination address of the first node.

It should be noted that for a specific implementation of the communication apparatus in the tenth aspect, refer to behavior functions of the third node in the communication method provided in any one of the fifth aspect or the possible designs of the fifth aspect.

According to an eleventh aspect, an embodiment of this application provides a communication apparatus. The communication apparatus includes one or more processors. The one or more processors are configured to run a computer program or instructions. When the one or more processors execute the computer instruction or the instructions, the communication apparatus is enabled to perform the communication method according to any one of the first aspect to the tenth aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to: receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a twelfth aspect, an embodiment of this application provides a communication apparatus. The communication apparatus includes an input/output interface and a logic circuit. The input/output interface is configured to: input and/or output information. The logic circuit is configured to perform the communication method according to any one of the first aspect to the tenth aspect, to perform processing based on information and/or generate information.

According to a thirteenth aspect, an embodiment of this application provides a computer-readable storage medium. The computer-readable storage medium stores computer instructions or a program. When the computer instructions or the program is run on a computer, the communication method according to any one of the first aspect to the tenth aspect is enabled to be performed.

According to a fourteenth aspect, an embodiment of this application provides a computer program product including computer instructions. When the computer program product is run on a computer, the communication method according to any one of the first aspect to the tenth aspect is enabled to be performed.

According to a fifteenth aspect, an embodiment of this application provides a computer program. When the computer program is run on a computer, the communication method according to any one of the first aspect to the tenth aspect is enabled to be performed.

For technical effects brought by any design manner of the eleventh aspect to the fifteenth aspect, refer to the technical effects brought by any one of the first aspect to the tenth aspect.

According to a sixteenth aspect, an embodiment of this application provides a communication system. The communication system may include a first node and a node in a node set. The first node is configured to send a first request, where the first request is used to request node information of one or more nodes, and the one or more nodes are nodes in the node set associated with the first node. The first node is further configured to obtain the node information of the one or more nodes. The node in the node set is configured to send the node information to the first node. The first node is further configured to determine a next-hop node of the first node from the one or more nodes based on the node information. The first node is further configured to send an updated first model of the first node to the next-hop node.

In a possible design, the node in the node set is a second node. The first node is specifically configured to: send the first request to one or more second nodes, and receive node information from the one or more second nodes, where the second node is a neighboring node of the first node in the node set. The second node is configured to: receive the first request from the first node, and send the node information to the first node.

In a possible design, the communication system further includes a third node. The first node is specifically configured to send the first request to the third node, where the third node is a control node of the node set. The third node is configured to: receive the first request from the first node, and send the first request to one or more fourth nodes, where the fourth node is a node in the node set. The fourth node is configured to: receive the first request from the third node, and send the node information to the first node. The first node is further configured to receive the node information from one or more fourth nodes.

In a possible design, the first node is specifically configured to: if a second node meets a first condition, send the first request to the third node, where the second node is a neighboring node of the first node in the node set, and the first condition includes one or more of the following: being traversed, a data distribution correlation with the first node is less than or equal to a first threshold, a distance to the first node is greater than or equal to a second threshold, a power for connection to the first node is less than or equal to a third threshold, and a computing power is less than or equal to a fourth threshold.

In a possible design, the first request includes event information, and the event information indicates to update the first model.

In a possible design, the first request further includes a destination address of the first node.

In a possible design, the node information includes one or more of the following: first indication information, degree information, data distribution information, computing power information, and channel state information, where the first indication information indicates whether a node is traversed.

In a possible design, the next-hop node is a node that is not traversed in the one or more nodes; the next-hop node is a node having a highest data distribution correlation with the first node in the one or more nodes; the next-hop node is a node closest to the first node in the one or more nodes; the next-hop node is a node connected to the first node at a highest power in the one or more nodes; the next-hop node is a node with a highest computing power in the one or more nodes; or the next-hop node is any one of the one or more nodes.

For technical effects brought by any design manner of the sixteenth aspect, refer to the technical effects brought by either of the first aspect and the second aspect.

According to a seventeenth aspect, an embodiment of this application provides a communication system. The communication system may include a third node and a node in a node set. The node in the node set is configured to send node information to the third node, where the third node is a control node of the node set. The third node is configured to: obtain node information of a plurality of nodes in the node set, determine a transmission path based on the node information of the plurality of nodes, and send path information to a node associated with the transmission path, where the path information indicates the transmission path, the node associated with the transmission path is a fourth node, and the fourth node is a node in the node set. The fourth node is configured to receive the path information from the third node.

In a possible design, the node information includes one or more of the following: first indication information, degree information, data distribution information, computing power information, and channel state information, where the first indication information indicates whether a node is traversed.

In a possible design, the third node is specifically configured to send the path information to a 1st node of the transmission path, where the path information indicates each node associated with the transmission path and a next-hop node of each node. The fourth node is configured to: if the fourth node is the 1st node of the transmission path, receive, by the fourth node, the path information from the third node.

In a possible design, the fourth node is further configured to: remove information associated with the fourth node from the path information, to obtain new path information, where the new path information is obtained through the removal; and send the new path information to a next-hop node of the fourth node.

In a possible design, the third node is specifically configured to send the path information to each node associated with the transmission path, where the path information indicates a next-hop node of a node associated with the path information. The fourth node is configured to receive the path information from the third node.

For technical effects brought by any design manner of the seventeenth aspect, refer to the technical effects brought by either of the third aspect and the fourth aspect.

According to an eighteenth aspect, an embodiment of this application provides a communication system. The communication system may include a first node, a third node, and a fourth node. The first node is configured to send a second request and an updated first model of the first node to the third node, where the third node is a control node of a node set associated with the first node, and the second request is used to request to forward updated first model of the first node. The third node is configured to receive the second request from the first node and the updated first model of the first node, and the third node is further configured to: obtain node information of one or more fourth nodes, determine a next-hop node based on the node information of the one or more fourth nodes, and send the updated first model of the first node to the next-hop node, where the fourth node is a node in the node set. The fourth node is configured to send the node information to the third node.

In a possible design, the node information includes one or more of the following: first indication information, degree information, data distribution information, computing power information, and channel state information, where the first indication information indicates whether a node is traversed.

In a possible design, before the third node obtains the node information of the one or more fourth nodes, the third node is further configured to send a first request to the one or more fourth nodes, where the first request is used to request to obtain the node information.

In a possible design, the first request includes event information, and the event information indicates to update the first model.

In a possible design, the first request further includes a destination address of the first node.

For technical effects brought by any design manner of the eighteenth aspect, refer to the technical effects brought by the fifth aspect.

## BRIEF DESCRIPTION OF DRAWINGS

FIG. 1a is a diagram of a communication system according to an embodiment of this application;

FIG. 1b is a diagram of a communication system according to an embodiment of this application;

FIG. 2 is a composition diagram of a communication apparatus according to an embodiment of this application;

FIG. 3 is a flowchart of a communication method according to an embodiment of this application;

FIG. 4 is a flowchart of a communication method according to an embodiment of this application;

FIG. 5 is a flowchart of a communication method according to an embodiment of this application;

FIG. 6 is a flowchart of a communication method according to an embodiment of this application;

FIG. 7 is a flowchart of a communication method according to an embodiment of this application;

FIG. 8 is a diagram of a communication apparatus according to an embodiment of this application; and

FIG. 9 is a composition diagram of a communication apparatus according to an embodiment of this application.

## DESCRIPTION OF EMBODIMENTS

Before embodiments of this application are described, technical terms used in embodiments of this application are described.

An artificial intelligence (artificial intelligence, AI) technology is new technical science that studies and develops theories, methods, techniques, and application systems for simulating, extending, and expanding human intelligence.

With continuous development of communication technologies, continuous attempts start to be made to combine the AI technology with a communication network, so as to implement model training and inference over the communication network. For example, research on supporting AI by using a network data analytics function (network data analytics function, NWDAF) is started from R16. For another example, in a radio access network 3 (radio access network 3, RAN3), a model training and inference framework is researched based on load balancing, mobility, and network energy saving.

The NWDAF mainly supports AI for data collection and analysis at an application layer, externally providing a service, and interface invoking. In R18, the NWDAF function is further extended in a study on further enhancement for data collection (study on further enhancement for data collection, SID).

For the RAN 3, a model may be deployed to an access network device for inference after operation, administration and maintenance (operation, administration and maintenance, OAM) training, or may be directly trained and inferred on an access network device.

In addition, for each node (or referred to as a network node, a data node, a network element, or the like) in a communication network, continuous attempts are made to perform AI-based processing on a functional feature of the node to replace original implementation with various AI algorithms, so as to adapt to increasingly complex scenario cases. In general, a combination of AI and a wireless network is increasingly close, and is also a research focus of future networks.

However, there is still a lack of extensive research on how to perform AI-based processing on a functional feature of a node to implement model training and inference between nodes in the communication network.

To resolve the foregoing technical problem, embodiments of this application provide a communication method. The method includes: A first node sends a first request, where the first request is used to request node information of one or more nodes, and the one or more nodes are nodes in a node set associated with the first node. The first node obtains the node information of the one or more nodes, determines a next-hop node of the first node from the one or more nodes based on the node information, and sends an updated first model of the first node to the next-hop node.

In embodiments of this application, the first node may determine the next-hop node independently based on the obtained node information, and a node selection mechanism that is applicable to model training and that can be implemented in a wireless network is provided. The mechanism can be used to determine a model transmission path for the model training, and is applicable to a completely self-organizing manner. This reduces management and control complexity, and is more flexible.

The following describes implementations of embodiments of this application in detail with reference to the accompanying drawings in this specification.

The communication method provided in embodiments of this application may be applied to any communication system. The communication system may be a third generation partnership project (third generation partnership project, 3GPP) communication system, for example, a long term evolution (long term evolution, LTE) system, or may be a fifth generation (fifth generation, 5G) mobile communication system, a new radio (new radio, NR) communication system, a 5G-NR communication system, or a new radio vehicle to everything (NR vehicle to everything, NR V2X) system. Alternatively, the communication method may be applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, the internet of things (internet of things, IoT), an IT system, and another next generation communication system, for example, a future communication system such as 6G, or may be applied to a non-3GPP communication system. This is not limited.

Embodiments of this application may be further applied to one or more of the following service scenarios: an enhanced mobile broadband (enhance mobile broadband, eMBB) service, ultra reliable and low latency communication (Ultra reliable and low latency communication, URLLC), machine-type communication (machine-type communication, MTC), massive machine-type communication (massive MTC, mMTC), narrowband internet of things (narrowband internet of things, NB-IoT), customer premise equipment (customer premise equipment, CPE), augmented reality/virtual reality (augmented reality/virtual reality, AR/VR), V2X, and the like. This is not limited.

The eMBB further improves performance such as user experience on a basis of a mobile broadband service scenario, and is also an application scenario most close to daily life. The most intuitive experience brought by 5G in this aspect is that a network speed is greatly improved. Even when a user watches a 4K high-definition video, a peak value can reach 10 Gbps. For example, the eMBB may be a large-traffic mobile broadband service like a three-dimensional (three-dimensional, 3D)/ultra-high-definition video.

Features of the URLLC may include high reliability, a low latency, and extremely high availability. The URLLC may include the following scenarios and applications: industrial application and control, traffic safety and control, remote manufacturing, remote training, remote surgery, and the like. The URLLC has great potential in a self-driving service. In addition, the URLLC is also very important for the security industry. For example, the URLLC may be a service, like self-driving or industrial automation, that needs a low-latency and high-reliability connection.

The MTC may also be referred to as M2M. The MTC features low cost, enhanced coverage, and the like.

The NB-IoT features wide coverage, wide connections, a low rate, low costs, low power consumption, an optimal architecture, and the like, for example, massive connections, lower power consumption, and lower chip costs, for example, a smart water meter, smart parking, smart pet tracking, a smart bicycle, a smart smoke detector, a smart toilet, a smart vending machine, and the like.

The CPE is a mobile signal access device that receives a mobile signal and forwards the mobile signal by using a wireless-fidelity (wireless-fidelity, Wi-Fi) signal, is also a device that converts a high-speed 4G or 5G signal into a Wi-Fi signal, and can support a large quantity of mobile terminals that can simultaneously access a network. The CPE may be widely used for wireless network access in rural areas, towns, hospitals, organizations, factories, residential communities, and the like, to save costs of deploying wired networks.

The V2X is a key technology for a future intelligent transportation system. The V2X implements communication between a vehicle and a vehicle, between a vehicle and a base station, and between a base station and a base station. In this way, a series of traffic information such as a real-time road condition, road information, and pedestrian information can be obtained. This improves driving safety, reduces congestion, improves traffic efficiency, provides in-vehicle infotainment information, and the like.

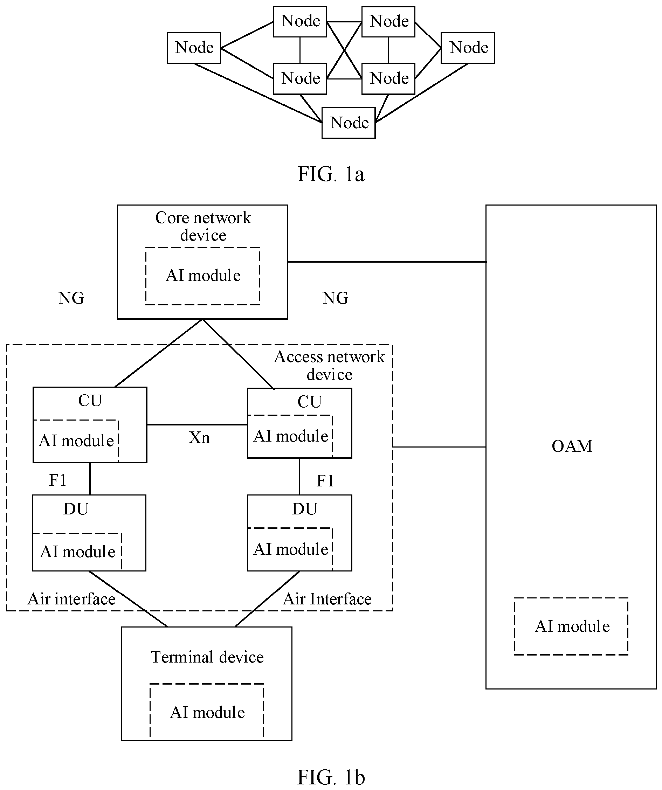

The following uses FIG. 1a as an example to describe a communication system provided in embodiments of this application.

FIG. 1a is a diagram of a communication system according to an embodiment of this application. As shown in FIG. 1a, the communication system may include a plurality of nodes (or described as a network node, a data node, an apparatus, a communication apparatus, a device, a communication device, or the like).

The node in FIG. 1a may be a device that can train and update a model.

For example, an AI model is used as an example. Each node in FIG. 1a may be a device having an AI computing capability.

For example, each node may include an AI module, and each node may implement AI model inference by using the AI module.

Optionally, each node in FIG. 1a may be any one of the following: a terminal device, an access network device, a core network device, a server, and the like. This is not limited.

The terminal device may be a device having a wireless transceiver function or a chip or a chip system that can be disposed in the device, may allow a user to access a network, and is a device configured to provide voice and/or data connectivity for the user. The terminal device may be an in-vehicle type, a portable type, a handheld type, or the like. The terminal device and the user may be completely independent. All user-related information may be stored in a smart card (SIM), and the card may be used on the terminal device. The terminal device may complete direct interaction with the access network device through an air interface. The terminal device may send a signal and/or receive a signal.

The terminal device may also be referred to as user equipment (user equipment, UE), a subscriber unit (subscriber unit), a terminal (terminal), a mobile station (mobile station, MS), a mobile terminal (mobile terminal, MT), or the like. Specifically, the terminal device may be a cellular phone (cellular phone), a smartphone (smartphone), a wireless data card, a mobile phone (mobile phone), a personal digital assistant (personal digital assistant, PDA) computer, a tablet computer or a computer with a wireless transceiver function, a wireless modem (modem), a handheld device (handset), or a laptop computer (laptop computer). Alternatively, the terminal device may be a VR terminal, an AR terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), an MTC terminal, a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The access network device may be any device that is deployed in an access network and that can perform wireless communication with the terminal device, and is responsible for all functions related to an air interface: functions such as a radio physical control function, resource scheduling, radio access control, radio link maintenance, radio resource management, and mobility management. The radio link maintenance function is to maintain a radio link with the terminal device, and is responsible for protocol conversion between radio link data and IP data. The radio resource management function includes radio link setup and release, radio resource scheduling and allocation, and the like. The mobility management function includes configuring the terminal device to perform measurement, evaluating quality of a radio link of the terminal device, determining inter-cell handover of the terminal device, and the like.

For example, the access network device may be an access network (access network, AN)/radio access network (radio access network, RAN) device, and includes a plurality of AN/RAN nodes. The AN/RAN node may be an access point (access point, AP), a base station (NodeB, NB), a macro base station, a micro base station (or described as a small cell), a relay station, an enhanced base station (enhanced NodeB, eNB), a next generation eNB (next generation eNB, ng-eNB), a next generation base station (next generation NodeB, gNB), a transmission reception point (transmission reception point, TRP), a transmission point (transmission point, TP), a transmission measurement function (transmission measurement function, TMF), a wearable device, an in-vehicle device, or another access node, or the like. This is not limited.

Alternatively, the access network device may be of a central unit (central unit, CU)/distributed unit (distributed unit, DU) architecture. In this case, the access network device may include two network elements: a CU and a DU. Alternatively, the access network device may be of a control plane-user plane (control plane-user plane, CP-UP) architecture. In this case, the access network device may include three network elements: a control plane (CU-CP) of a CU, a user plane (CU-UP) of a CU, and a DU. This is not limited. The access network device may further include a remote unit (remote unit, RU). In different systems, the CU (or the CU-CP and the CU-UP), the DU, or the RU may also have different names, but a person skilled in the art may understand meanings of the names. For example, in an open radio access network (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented by using a software module, a hardware module, or a combination thereof.

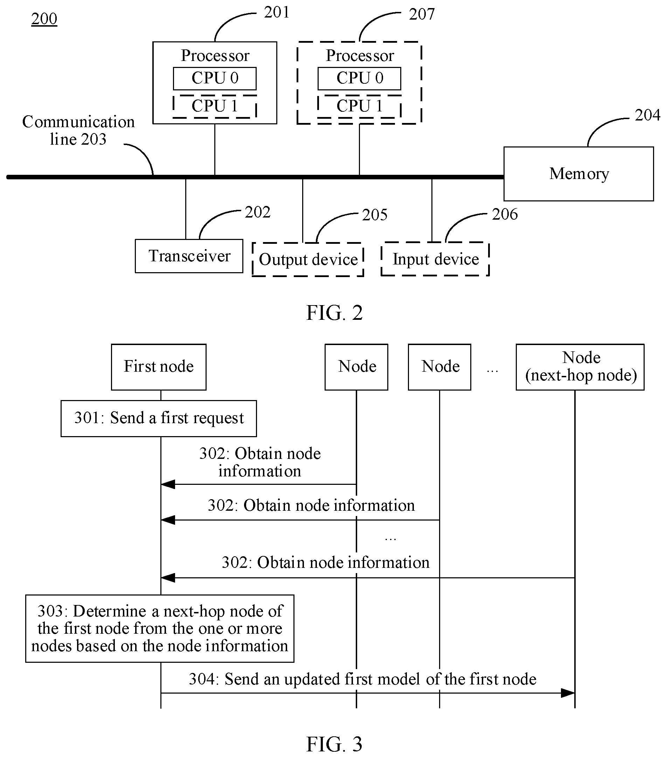

Optionally, when the access network device is a CU (or an O-CU, a CU-CP, or a CU-UP), a DU (or an O-DU), or an RU (or an O-RU), the CU, the DU, or the RU may perform all sending and receiving operations performed by a node (such as a first node or another node) in the following embodiments shown in FIG. 3 to FIG. 7, and/or may be configured to support another process of the technology described in this specification. The CU, the DU, or the RU may alternatively be configured to perform all operations other than the sending and receiving operations performed by the node in the following embodiments shown in FIG. 3 to FIG. 7, and/or configured to support another process of the technology described in this specification. This is not limited.

Optionally, when the access network device includes a CU, a DU, and an RU, the DU or the RU may perform all sending and receiving operations performed by a node (such as a first node or another node) in the following embodiments shown in FIG. 3 to FIG. 7, and/or may be configured to support another process of the technology described in this specification. The CU or the DU performs all operations other than the sending and receiving operations performed by the node in the following embodiments shown in FIG. 3 to FIG. 7, and/or configured to support another process of the technology described in this specification. This is not limited.

The core network device is mainly responsible for providing a user connection, performing user management, and completing service bearing, and serves as a bearer network to provide an interface to an external network.

For example, the core network device may include network elements such as a mobility management network element, a session management network element, and a user plane network element, and a session management network element. This is not limited.

The server may be deployed in a data network. The data network may be an operator network that provides a data transmission service for a user, for example, an operator network that may provide an internet protocol multi-media service (internet protocol multi-media service, IMS) for the user. This is not limited.

Optionally, as shown in FIG. 1b, nodes in a communication system may be connected to each other through an interface (for example, an NG or Xn) or an air interface. One or more AI modules (only one is shown in FIG. 1b for clarity) are disposed in one or more devices of these nodes, such as a core network device, an access network device, a terminal device, or an operation, administration and maintenance (operation, administration and maintenance, OAM) device. The access network device may be used as an independent RAN node, or may include a plurality of RAN nodes, for example, include a CU and a DU. One or more AI modules may also be disposed on the CU and/or the DU Optionally, the CU may be further split into a CU-CP and a CU-UP. One or more AI modules are disposed in the CU-CP and/or the CU-UP.

The AI module is configured to implement a corresponding AI function. AI modules deployed on different nodes may be the same or different. A model of the AI module is configured based on different parameters, and the AI module can implement different functions. The model of the AI module may be configured based on one or more of the following parameters: a structure parameter (for example, at least one of a quantity of neural network layers, a width of a neural network, a connection relationship between layers, a weight of a neuron, an activation function of a neuron, or an offset in an activation function), an input parameter (for example, a type of the input parameter and/or a dimension of the input parameter), or an output parameter (for example, a type of the output parameter and/or a dimension of the output parameter). The offset in the activation function may also be referred to as an offset of the neural network.

One AI module may have one or more models. One model may obtain one output through inference, and the output includes one or more parameters. Learning processes, training processes, or inference processes of different models may be deployed on different nodes or devices, or may be deployed on a same node or device.

It should be noted that each node in this embodiment of this application may be one or more chips, or may be a system on chip (system on chip, SOC) or the like. FIG. 1a is merely an example accompany drawing, and includes an unlimited quantity of devices. In addition, in addition to the devices shown in FIG. 1a, the communication system may further include another device. Names of the devices and links in FIG. 1a are not limited. In addition to the names shown in FIG. 1a, the devices and the links may further have other names. This is not limited.

During specific implementation, each node shown in FIG. 1a may use a composition structure shown in FIG. 2, or include components shown in FIG. 2. FIG. 2 is a composition diagram of a communication apparatus 200 according to an embodiment of this application. The communication apparatus 200 may be a node, or a chip or a system on chip in a node. As shown in FIG. 2, the communication apparatus 200 includes a processor 201, a transceiver 202, and a communication line 203.

Further, the communication apparatus 200 may further include a memory 204. The processor 201, the memory 204, and the transceiver 202 may be connected through the communication line 203.

The processor 201 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 201 may be another apparatus having a processing function, for example, a circuit, a component, or a software module. This is not limited.

The transceiver 202 is configured to communicate with another device or another communication network. The another communication network may be an Ethernet, a radio access network (radio access network, RAN), a wireless local area network (wireless local area network, WLAN), or the like. The transceiver 202 may be a module, a circuit, a transceiver, or any apparatus that can implement communication.

The communication line 203 is configured to transmit information between parts included in the communication apparatus 200.

The memory 204 is configured to store instructions. The instructions may be a computer program.

The memory 204 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), magnetic disk storage medium or another magnetic storage device, or the like. This is not limited.

It should be noted that the memory 204 may exist independently of the processor 201, or may be integrated with the processor 201. The memory 204 may be configured to store instructions, program code, some data, or the like. The memory 204 may be located in the communication apparatus 200, or may be located outside the communication apparatus 200. This is not limited. The processor 201 is configured to execute the instructions stored in the memory 204, to implement the communication method provided in the following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device like a keyboard, a mouse, a microphone, or a joystick, and the output device 205 is a device like a display or a speaker (speaker).

It should be noted that the communication apparatus 200 may be a desktop computer, a portable computer, a network server, a mobile phone, a tablet computer, a wireless terminal, an embedded device, a chip system, or a device having a similar structure in FIG. 2. In addition, the composition structure shown in FIG. 2 does not constitute a limitation on the communication apparatus. In addition to the parts shown in FIG. 2, the communication apparatus may include more or fewer parts than the parts shown in the figure, or some parts may be combined, or there may be a different part layout.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 1a, an example in which a first model is trained is used. A node set used to train the first model may be determined from nodes in the communication system.

The first model may be any to-be-trained model, the node set may include a plurality of nodes used to train the first model, and the node set may also be referred to as a collaboration set.

Optionally, the node set used to train the first model is determined based on a data type, a service type, a computing power, and the like.

For example, the first model is a model that is trained based on data of a service A. A plurality of nodes that execute the service A may be determined as the node set used to train the first model.

Optionally, when each node in the node set trains the first model, the first model may be sequentially routed between the nodes in the node set, and each node updates the first model based on local original data, and sends an updated first model to a next-hop node.

For example, when training the first model, each node in the node set may train the first model in a Snake Learning manner.

Snake Learning is a distributed learning algorithm. A model may be sequentially transmitted between nodes, and each node selectively updates the model based on a local computing resource and local data. Snake Learning has advantages such as high communication efficiency, heterogeneous self-adaptation, decentralization, and self-organization, and is suitable for intelligent collaboration between nodes in a network.

Snake Learning may be combined with a communication network, to determine a transmission path of the first model, so that the first model can be transmitted between nodes.

Refer to FIG. 3. For example, a first node is used as an example to describe in detail a process in which each node determines a next-hop node and sends an updated first model to the next-hop node. The first node may be any node in a node set. In other words, any node in the node set may determine a next-hop node, and send the updated first model to the next-hop node with reference to the method described in FIG. 3.

FIG. 3 is a flowchart of a communication method according to an embodiment of this application. As shown in FIG. 3, the method may include the following steps.

Step 301: A first node sends a first request.

The first request may be used to request node information of one or more nodes, and the one or more nodes may be nodes in a node set associated with the first node.

Optionally, the first request may also be referred to as an assistance information collection request, and the node information may also be referred to as assistance information.

Optionally, the first request includes event information, and the event information may indicate to update a first model.

Optionally, the first request further includes a destination address of the first node, so that a node that receives the first request can send the node information to the first node based on the destination address of the first node.

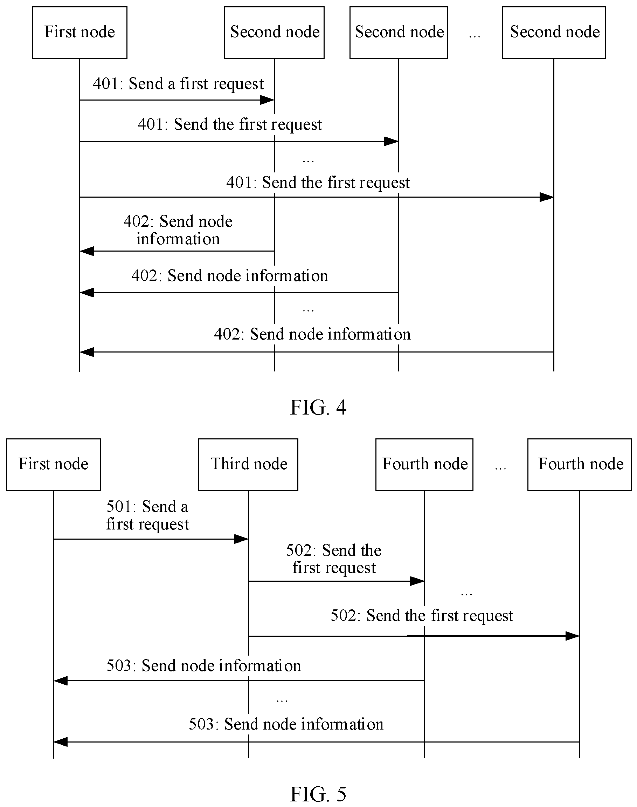

In a first possible design, the first node may send the first request to a second node with reference to the following method shown in FIG. 4, to obtain node information of the second node.

Step 401: A first node sends a first request to one or more second nodes, and correspondingly, the one or more second nodes receive the first request from the first node.

The second node may be a neighboring node of a first node in a node set.

Optionally, the neighboring node is a node that has a connection link (or referred to as a direct connection link) with the first node.

For example, the connection link may be one or more of the following: an Xn link, a sidelink (sidelink, SL), an uplink (uplink, UL), a downlink (downlink, DL), or the like. This is not limited.

The first node may maintain a neighboring node list in advance. When the first node executes a training task for a first model, the first node may send the first request to one or more second nodes in the neighboring node list based on the neighboring node list.

Optionally, the first node may send the first request to the one or more second nodes after completing update training on the first model, or the first node may send the first request to the one or more second nodes before completing update training on the first model (for example, when receiving the first model sent by a previous-hop node, or in a training process of the first model). This is not limited.

Step 402: The one or more second nodes send node information to the first node, and correspondingly, the first node receives the node information from the one or more second nodes.

When receiving the first request, the second node may send the node information of the second node to the first node based on the first request.

In a second possible design, the first node may alternatively send the first request to a third node with reference to the following method shown in FIG. 5, to obtain node information of a fourth node.

Step 501: A first node sends a first request to a third node, and correspondingly, the third node receives the first request from the first node.

The third node may be a control node in a node set.

Optionally, the third node may be a neighboring node of the first node, or may be a non-neighboring node of the first node. This is not limited.

For example, the third node may be a HiC controller (HiC controller, HicC) in a heterarchical intelligent collaboration (heterarchical intelligent collaboration, HiC) architecture.

The HiC architecture is a standard architecture provided for intelligent collaboration between network elements at various layers, including collaboration organization management, protocol interfaces, and interaction procedures. HiC can efficiently organize collaboration between AI tasks on network elements/terminals from space and time dimensions, support transferring diversified intelligent representations between the network elements, and unify a transmission format. In addition, HiC ensures that collaboration can be managed and controlled and a collaboration pattern (Pattern) can be extended, and flexibly supports various collaborative learning manners.

Optionally, when obtaining the node information, the first node may directly send the first request to the third node, to search a node set with a large range for a next-hop node, to improve a success rate of node selection.

Optionally, when obtaining the node information, the first node may alternatively search second nodes with a small range for the next-hop node by using the method shown in FIG. 4. Because the second node is a neighboring node of the first node, a delay in obtaining the node information by the first node can be shortened, so that the first node quickly determines the next-hop node, and a processing delay is shortened. However, when the first node cannot determine a next-hop node from neighboring nodes, the first node may send the first request to the third node, to search a node set with a larger range for the next-hop node, to improve the success rate of node selection.

For example, if all neighboring nodes (that is, the second nodes) of the first node have been traversed or do not meet a requirement of the first node for selecting the next-hop node, the first node may send the first request to the third node, to request the third node to assist the first node in determining the next-hop node.

For example, if the second node meets a first condition, the first node may send the first request to the third node.

The first condition may include one or more of the following: being traversed, a data distribution correlation with the first node is less than or equal to a first threshold, a distance to the first node is greater than or equal to a second threshold, a power for connection to the first node is less than or equal to a third threshold, and a computing power is less than or equal to a fourth threshold.

The first threshold, the second threshold, the third threshold, and the fourth threshold may be pre-specified in a protocol, or may be self-defined by the first node. This is not limited.

Optionally, the first request sent by the first node to the third node may also be referred to as a node skipping request. When receiving the node skipping request, the third node may start a collection mode (in other words, the third node performs a collection function), that is, perform the following step 502 to send the first request to a node in the node set.

Step 502: The third node sends the first request to one or more fourth nodes, and correspondingly, the one or more fourth nodes receive the first request from the third node.

The fourth node may be the node in the node set.

Optionally, when the third node is a HicC, the first request sent by the third node to the fourth node may further include identification information of the HicC.

Step 503: The one or more fourth nodes send node information to the first node, and correspondingly, the first node receives the node information from the one or more fourth nodes.

When receiving the first request, the fourth node may send the node information of the fourth node to the first node based on the first request.

Optionally, different from a case that the fourth node sends the node information to the first node, the fourth node may alternatively send the node information to the third node, and the third node forwards the node information of the fourth node to the first node.

Based on the foregoing two possible designs, optionally, the node information may further include node identification information, to indicate a node corresponding to the node information.

Step 302: The first node obtains the node information of the one or more nodes.

The first node may obtain the node information of the one or more second nodes with reference to the method shown in FIG. 4, or may obtain the node information of the one or more fourth nodes with reference to the method shown in FIG. 5.

The node information may include one or more of the following: first indication information, degree information, data distribution information, computing power information, and channel state information.

The first indication information may indicate whether a node is traversed. The degree information may indicate a quantity of neighboring nodes of a node. The channel state information may indicate information such as a connection rate, a transmission distance, and channel quality of a node.

Step 303: The first node determines a next-hop node of the first node from the one or more nodes based on the node information.

In a first possible implementation, the next-hop node may be a node that is not traversed in the one or more nodes.

The first node may determine, based on the first indication information, whether each node has been traversed, and select a node that has not been traversed as the next-hop node, to enable the first model to be completely traversed in the node set as soon as possible.

In a second possible implementation, the next-hop node may be a node having a highest data distribution correlation with the first node in the one or more nodes.

The first model is sequentially trained, a data feature difference between two adjacent nodes affects a convergence effect of the first model, and a model convergence direction may flap if the next-hop node is not properly selected. Therefore, when the next-hop node is selected, a correlation degree between a data feature of each node and a data feature of the first node may be fully measured, and a node that has the highest correlation is selected as the next-hop node.

For example, with reference to the following formula (1) and formula (2), a distance between data distributions may be calculated by using a KL divergence, to represent a correlation between data:

$$q = Min_q D(p||q) \hspace{3cm} \text{Formula (1)}$$

$$D(p||q) = \int p(x) log \frac{p(x)}{q(x)} dx \hspace{2cm} \text{Formula (2)}$$

p represents a sample distribution of the first node, and q represents a sample distribution of another node. A larger KL divergence indicates a larger degree of difference between p and q. A smaller KL divergence indicates a smaller degree of difference between p and q.

In a third possible implementation, the next-hop node may be a node closest to the first node in the one or more nodes.

In consideration of a data transmission delay and energy consumption, the next-hop node may be determined as the node closest to the first node in the one or more nodes, to reduce the data transmission delay and power consumption.

For example, the first node is a base station, and the next-hop node of the first node may be a neighboring station.

In a fourth possible implementation, the next-hop node may be a node connected to the first node at a highest power in the one or more nodes.

In consideration of a data transmission delay and energy consumption, the next-hop node may be determined, based on the channel state information, as the node connected to the first node at the highest power in the one or more nodes, to reduce the data transmission delay and power consumption.

For example, the first node may determine, based on the channel state information, a node with best channel quality as the node connected to the first node at the highest power in the one or more nodes.

In a fifth possible implementation, the next-hop node may be a node with a highest computing power in the one or more nodes.

Each node in the node set may update some or all parameters of the first model based on a computing power of the node. Therefore, the first node may select the node with the highest computing power as the next-hop node, to quickly train more parameters.

In a sixth possible implementation, the next-hop node may be any one of the one or more nodes.

The first node may alternatively use randomness to randomly select one node from the one or more nodes as the next-hop node, to resolve a problem that a weight of a factor is excessively large in a fixed mode. In addition, implementation is simple, and no additional information needs to be collected.

Optionally, the first node may determine the next-hop node based on one or more of the first possible implementation to the sixth possible implementation. In other words, the first node may comprehensively consider a plurality of factors mentioned in the first possible implementation to the sixth possible implementation, to perform optimization in a case of a multi-factor parameter.

For example, the first node may mathematically analyze, in a mathematical modeling manner, impact of each factor (for example, one or more of whether a node is traversed, a correlation, a node distance, a node computing power, a connection power, and a randomly selected node) on final model training, to perform optimal solution in a case of a multi-factor parameter. This is highly explainable.

For example, the first node may determine the next-hop node with reference to the following formula (3):

$$\text{Next-hop node} = \underset{i}{\arg\max}\, I(u_i) \cdot \frac{1}{KL(p||q_i)} \log(DCR_i) \qquad \text{Formula (3)}$$

$u_i$ may represent whether a node is traversed; $p$ represents a sample distribution of the first node; $q_i$ may represent a sample distribution of the node; I may represent an indicative function; KL may represent a data distribution divergence; and DCR may represent a factor for measurement (on a degree, a computing power, and channel state information).

In another example, the first node may alternatively use, in an AI modeling manner, a plurality of factors (for example, the one or more of whether a node is traversed, a correlation, a node distance, a node computing power, a connection power, and a randomly selected node) as an input feature, and perform modeling through deep learning or reinforcement learning, to learn a routing solution. This implementation is relatively simple.

Step 304: The first node sends an updated first model of the first node to the next-hop node.

After determining the next-hop node independently, the first node may send the updated first model of the first node to the next-hop node, and the next-hop node continues to perform update training on the first model, to train the first model among a plurality of nodes.

Based on the method shown in FIG. 3, the first node may determine the next-hop node independently based on the obtained node information, and a node selection mechanism that is applicable to model training and that can be implemented in a wireless network is provided. The mechanism can be used to determine a model transmission path for the model training, and is applicable to a completely self-organizing manner. This reduces management and control complexity and is more flexible.

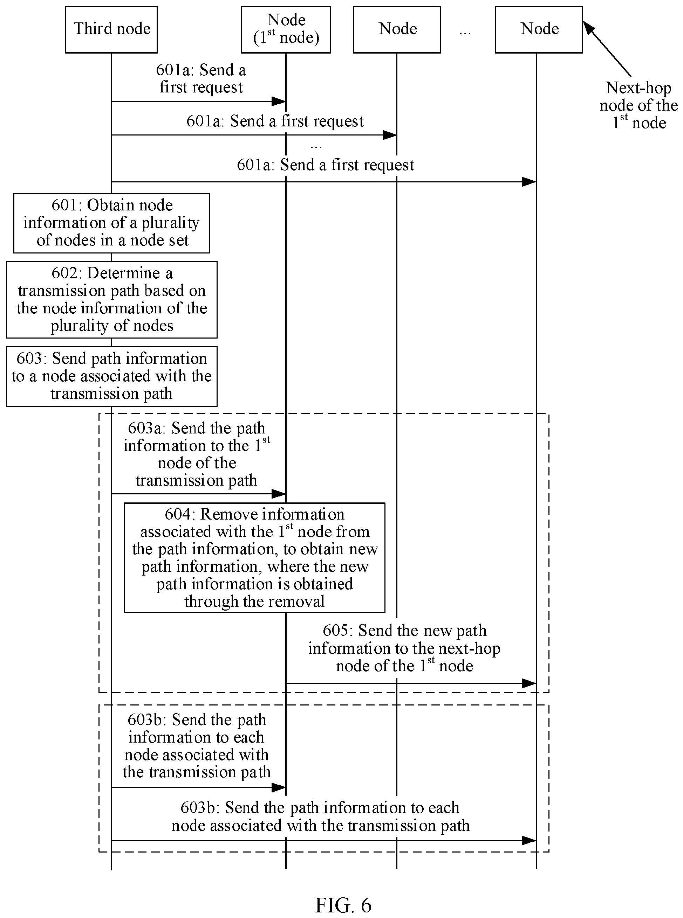

Different from a case that the first node determines the next-hop node independently in FIG. 3 to FIG. 5, as shown in FIG. 6, the third node may also plan a transmission path for the first model based on global coordinated planning and node information of each node in the node set.

FIG. 6 is a communication method according to an embodiment of this application. As shown in FIG. 6, the method may include the following steps.

Step 601: A third node obtains node information of a plurality of nodes in a node set.

The third node may be a control node in the node set.

For example, the third node may be a HicC in a HiC architecture.

For descriptions of the node information, refer to the descriptions of the node information in FIG. 3. Details are not described again.

Optionally, the third node may maintain each node in the node set in a list form.

For example, as shown in step 601a in FIG. 6, the third node may send a first request to each node in the node set, and each node in the node set may send node information of the node to the third node based on the first request.

The first request may be used to request node information of one or more nodes, and the one or more nodes may be nodes in the node set.

Optionally, the first request may also be referred to as an assistance information collection request.

Optionally, the first request includes event information, and the event information may indicate to update a first model.

Optionally, the first request further includes a destination address of the third node or identification information of the third node, so that a node that receives the first request may send the node information to the third node based on the destination address of the third node or the identification information of the third node.

Step 602: The third node determines a transmission path based on node information of a plurality of nodes.

Before training of the first model starts, the third node may calculate and determine a complete transmission path of the first model based on the obtained node information of the plurality of nodes.

Optionally, the third node may determine the transmission path by calculating a weight of an edge of each node.

The edge may be used to measure a transmission channel between two nodes. For example, weights of edges of any two nodes may be converted based on channel state information between the two nodes, data distribution features of the two nodes, and the like.

For example, the third node may calculate a shortest route by using a Dijkstra algorithm, and use the shortest route as the transmission path of the first model.

Step 603: The third node sends path information to a node associated with the transmission path.

The path information may indicate the transmission path.

In a possible design, as shown in step 603a in FIG. 6, the third node may send the path information to a 1st node of the transmission path.

The path information may indicate each node associated with the transmission path and a next-hop node of each node. The path information may also be referred to as complete path information.

Optionally, the third node encodes the path information, and sends encoded path information to the 1st node of the transmission path, to reduce signaling overheads.

For example, the third node may encode the path information in one or more of the following encoding manners: number system encoding, Hoffman encoding, remainder theorem encoding, and the like. This is not limited.

For example, for the number system encoding, an example in which there are five nodes on the transmission path is used. Assuming that a routing sequence of the five nodes is 1, 9, 14, 53, and 7, the encoded path information may be 0753140901, in other words, one UIINT32 may be used to represent the path information.

For another example, for the Hoffman encoding, a binary encoding may be performed on each node, and a node with a high collaboration probability is given a smaller encoding length.

For still another example, for the remainder theorem encoding, an example in which there are three nodes on the transmission path is used. Assuming that a routing sequence of the three nodes is 3, 7, and 13, and connection ports are 2, 6, and 4 respectively, an encoding value calculated by using a remainder theorem may be 251, a next-hop port obtained by the node 3 may be 251%3=2, a next-hop port obtained by the node 7 may be 251%7=6, and a next-hop port obtained by the node 13 may be 251%13=4.

Optionally, as shown in step 604 and step 605 in FIG. 6, when receiving the path information sent by the third node, the 1st node of the transmission path may further remove information associated with the 1st node from the path information, to obtain new path information, where the new path information is obtained through the removal; and send the new path information to a next-hop node of the 1st node, to implement sequential path information transmission between nodes associated with the transmission path, and ensure that each node associated with the transmission path can determine a next-hop node of the node.

In another possible design, as shown in step 603b in FIG. 6, the third node may alternatively send the path information to each node associated with the transmission path.

The path information may indicate a next-hop node of a node associated with the path information.

For example, the transmission path determined by the third node based on the node information of the plurality of nodes is: a node 1 to a node 3 to a node 4 to a node 2. The path information sent by the third node to the node 1 may include identification information of the node 3, to indicate that a next-hop node of the node 1 is the node 3. The path information sent by the third node to the node 3 may include identification information of the node 4, to indicate that a next-hop node of the node 3 is the node 4. The path information sent by the third node to the node 4 may include identification information of the node 2, to indicate that a next-hop node of the node 4 is the node 2. The path information sent by the third node to the node 2 indicates that the node 2 is a tail node, or The path information sent by the third node to the node 2 may include identification information of the node 1, to indicate that a next-hop node of the node 2 is the node 1, so as to implement multi-round training of the first model among the nodes.

Based on the method shown in FIG. 6, the third node may determine a complete transmission path of the first model. This is applicable to a scenario in which a plurality of nodes uniformly train a same model, and can perform model convergence more efficiently.

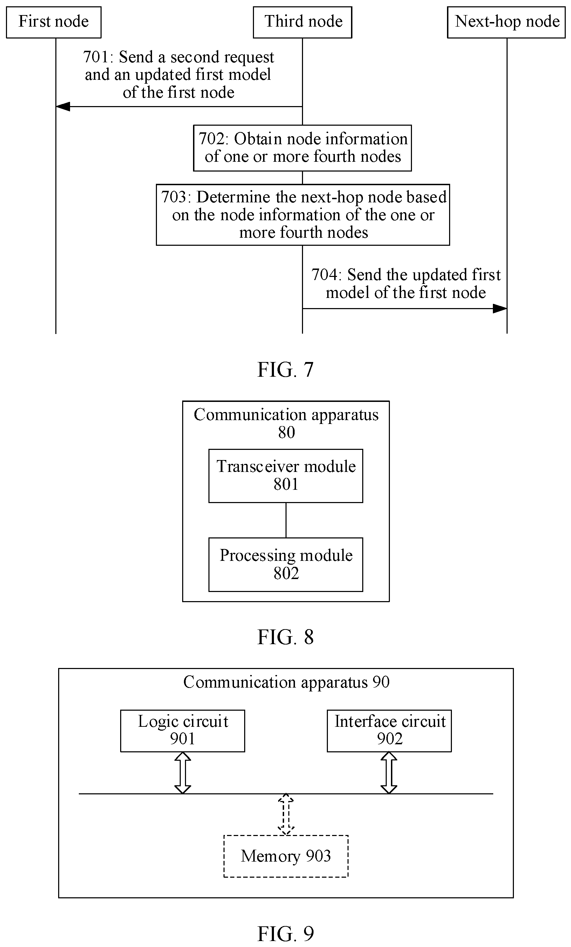

Different from a case that each node determines the next-hop node independently or the third node determines the transmission path in a unified manner in FIG. 3 to FIG. 6, as shown in FIG. 7, the third node may also determine the next-hop node, and forward an updated first model of the first node to the next-hop node.

FIG. 7 is a communication method according to an embodiment of this application. As shown in FIG. 7, the method may include the following steps.

Step 701: A first node sends a second request and an updated first model of the first node to a third node, and correspondingly, the third node receives the second request from the first node and the updated first model of the first node.

The second request may be used to request to forward the updated first model of the first node.

Optionally, the first node may directly send the second request and the updated first model of the first node to the third node, to search a node set with a large range for a next-hop node, to improve a success rate of node selection.

Optionally, the first node may alternatively search second nodes with a small range for a next-hop node by using the method shown in FIG. 4. Because the second node is a neighboring node of the first node, a delay in obtaining node information by the first node can be shortened, so that the first node quickly determines the next-hop node, and a processing delay is shortened. However, when the first node cannot determine the next-hop node from neighboring nodes, the first node may send the second request and the updated first model of the first node to the third node, to search a node set with a larger range for the next-hop node, to improve a success rate of node selection.

For example, if all neighboring nodes (that is, the second node) of the first node have been traversed or do not meet a requirement of the first node for selecting the next-hop node, the first node may send the second request and the updated first model of the first node to the third node, to request the third node to forward the updated first model of the first node.

For example, if the second node meets a first condition, the first node may send the second request and the updated first model of the first node to the third node.

For descriptions of the first condition, refer to the detailed descriptions of the first condition in step 501. Details are not described again.

Optionally, the second request sent by the first node to the third node may also be referred to as a node skipping request. When receiving the node skipping request, the third node may start a forwarding mode (in other words, the third node performs a forwarding function), that is, perform the following step 702 to step 704, to forward the updated first model of the first node to the next-hop node determined by the third node.

Step 702: The third node obtains node information of one or more fourth nodes.

The fourth node may be a node in the node set.

The third node may obtain the node information of the one or more fourth nodes with reference to the descriptions of obtaining, by the third node, the node information of the plurality of nodes in the node set in step 601. Details are not described again.

Step 703: The third node determines the next-hop node based on the node information of the one or more fourth nodes.

The third node may determine the next-hop node based on the node information of the one or more fourth nodes with reference to the descriptions of determining the next-hop node by the first node based on the node information in step 303. Details are not described again.

Step 704: The third node sends the updated first model of the first node to the next-hop node.

After determining the next-hop node, the third node may forward the updated first model of the first node to the next-hop node, and the next-hop node continues to train the first model.

It should be noted that the methods in FIG. 3 to FIG. 7 may be implemented separately, or may be implemented in combination. For example, FIG. 3 may be implemented in combination with FIG. 4, may be implemented in combination with FIG. 5, or may be implemented in combination with FIG. 7. This is not limited.

It may be understood that an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

The solutions provided in embodiments of this application are mainly described above from a perspective of interaction between devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each corresponding function, FIG. 8 shows a communication apparatus 80. The communication apparatus 80 may perform actions performed by any one of the first node to the fourth node in the methods shown in FIG. 3 to FIG. 7. All related content of steps in the foregoing method embodiments may be cited to function descriptions of corresponding function modules. For technical effects that can be achieved by the communication apparatus 80, refer to the foregoing method embodiments. Details are not described herein again.

The communication apparatus 80 may include a transceiver module 801 and a processing module 802. For example, the communication apparatus 80 may be a communication device, may be a chip used in the communication device, or another combined device or component that has a function of the foregoing communication apparatus. When the communication apparatus 80 is the communication device, the transceiver module 801 may be a transceiver. The transceiver may include an antenna, a radio frequency circuit, and the like. The processing module 802 may be a processor (or a processing circuit), for example, a baseband processor. The baseband processor may include one or more CPUs. When the communication apparatus 80 is the component that has the function of the foregoing communication apparatus, the transceiver module 801 may be a radio frequency unit; and the processing module 802 may be a processor (or a processing circuit), for example, a baseband processor. When the communication apparatus 80 is a chip system, the transceiver module 801 may be an input/output interface of the chip (for example, a baseband chip), and the processing module 802 may be a processor (or a processing circuit) of the chip system, and may include one or more central processing units. It should be understood that the transceiver module 801 in this embodiment of this application may be implemented by the transceiver or a transceiver-related circuit component; and the processing module 802 may be implemented by the processor or a processor-related circuit component (or referred to as the processing circuit).

For example, the transceiver module 801 may be configured to perform all receiving and sending operations performed by the communication apparatus in embodiments shown in FIG. 3 to FIG. 7, and/or configured to support another process of the technology described in this specification. The processing module 802 may be configured to perform all operations other than the receiving and sending operations performed by the communication apparatus in embodiments shown in FIG. 3 to FIG. 7, and/or configured to support another process of the technology described in this specification.

In another possible implementation, the transceiver module 801 in FIG. 8 may be replaced with a transceiver, and a function of the transceiver module 801 may be integrated into the transceiver. The processing module 802 may be replaced with a processor, and a function of the processing module 802 may be integrated into the processor. Further, the communication apparatus 80 shown in FIG. 8 may include a memory.

Alternatively, when the processing module 802 is replaced with a processor, and the transceiver module 801 is replaced with a transceiver, the communication apparatus 80 in this embodiment of this application may be a communication apparatus 90 shown in FIG. 9. The processor may be a logic circuit 901, and the transceiver may be an interface circuit 902. Further, the communication apparatus 90 shown in FIG. 9 may further include a memory 903.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in a terminal in any one of the foregoing embodiments (including a data transmit end and/or a data receive end), for example, a hard disk or memory of the terminal. The foregoing computer-readable storage medium may alternatively be an external storage device of the foregoing terminal, for example, a plug-in hard disk, a smart media card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item) "means one or more. "A plurality of" refers to two or more than two. "At least two (items) "means two, three, or more. The term "and/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when ..." and "if" mean that corresponding processing is

# EP 4 618 501 A1

performed in an objective case, are not intended to limit time, do not require a determining action during implementation, and do not mean that there is another limitation.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:

   sending, by a first node, a first request, wherein the first request is used to request node information of one or more nodes, and the one or more nodes are nodes in a node set associated with the first node;
   obtaining, by the first node, the node information of the one or more nodes;
   determining, by the first node, a next-hop node of the first node from the one or more nodes based on the node information; and
   sending, by the first node, an updated first model of the first node to the next-hop node.

2. The method according to claim 1, wherein sending, by the first node, the first request comprises:

   sending, by the first node, the first request to one or more second nodes, wherein the second node is a neighboring node of the first node in the node set; and
   receiving, by the first node, node information from the one or more second nodes.

3. The method according to claim 1, wherein sending, by the first node, the first request comprises:

   sending, by the first node, the first request to a third node, wherein the third node is a control node of the node set; and
   receiving, by the first node, node information from one or more fourth nodes, wherein the fourth node is a node in the node set.

4. The method according to claim 3, wherein sending, by the first node, the first request to the third node comprises:

if a second node meets a first condition, sending, by the first node, the first request to the third node, wherein the second node is a neighboring node of the first node in the node set, and the first condition comprises one or more of the following: being traversed, a data distribution correlation with the first node is less than or equal to a first threshold, a distance to the first node is greater than or equal to a second threshold, a power for connection to the first node is less than or equal to a third threshold, and a computing power is less than or equal to a fourth threshold.

5. The method according to any one of claims 1 to 4, wherein
the first request comprises event information, and the event information indicates to update the first model.

6. The method according to any one of claims 1 to 5, wherein
the first request further comprises a destination address of the first node.

7. The method according to any one of claims 1 to 6, wherein
the node information comprises one or more of the following: first indication information, degree information, data distribution information, computing power information, and channel state information, wherein the first indication information indicates whether a node is traversed.

8. The method according to any one of claims 1 to 7, wherein

the next-hop node is a node that is not traversed in the one or more nodes;
the next-hop node is a node having a highest data distribution correlation with the first node in the one or more nodes;
the next-hop node is a node closest to the first node in the one or more nodes;
the next-hop node is a node connected to the first node at a highest power in the one or more nodes;
the next-hop node is a node with a highest computing power in the one or more nodes; or
the next-hop node is any one of the one or more nodes.

9. A communication method, comprising:

receiving, by a third node, a first request from a first node, wherein the third node is a control node of a node set associated with the first node, the first request is used to request node information of one or more nodes, the one or more nodes are nodes in the node set, and the node information is used by the first node to determine a next-hop node of the first node; and
sending, by the third node, the first request to one or more fourth nodes, wherein the fourth node is a node in the node set.

10. The method according to claim 9, wherein
the first request comprises event information, and the event information indicates to update a first model.

11. The method according to claim 9 or 10, wherein
the first request further comprises a destination address of the first node.

12. The method according to any one of claims 9 to 11, wherein
the node information comprises one or more of the following: first indication information, degree information, data distribution information, computing power information, and channel state information, wherein the first indication information indicates whether a node is traversed.

13. A communication method, comprising:

obtaining, by a third node, node information of a plurality of nodes in a node set, wherein the third node is a control node of the node set;
determining, by the third node, a transmission path based on the node information of the plurality of nodes; and
sending, by the third node, path information to a node associated with the transmission path, wherein the path information indicates the transmission path.

14. The method according to claim 13, wherein
the node information comprises one or more of the following: first indication information, degree information, data distribution information, computing power information, and channel state information, wherein the first indication information indicates whether a node is traversed.

15. The method according to claim 13 or 14, wherein sending, by the third node, the path information to the node associated with the transmission path comprises:
sending, by the third node, the path information to a 1st node of the transmission path, wherein the path information indicates each node associated with the transmission path and a next-hop node of each node.

16. The method according to claim 13 or 14, wherein sending, by the third node, the path information to the node associated with the transmission path comprises:
sending, by the third node, the path information to each node associated with the transmission path, wherein the path information indicates a next-hop node of a node associated with the path information.

17. A communication method, comprising:

   sending, by a fourth node, node information to a third node, wherein the fourth node is a node in a node set, and the third node is a control node of the node set; and
   receiving, by the fourth node, path information from the third node, wherein the path information indicates a transmission path, and the transmission path is determined based on the node information.

18. The method according to claim 17, wherein
the node information comprises one or more of the following: first indication information, degree information, data distribution information, computing power information, and channel state information, wherein the first indication information indicates whether a node is traversed.

19. The method according to claim 17 or 18, wherein
if the fourth node is a 1st node of the transmission path, the path information indicates each node associated with the transmission path and a next-hop node of each node.

20. The method according to claim 19, wherein the method further comprises:

   removing, by the fourth node, information associated with the fourth node from the path information, to obtain new path information, wherein the new path information is obtained through the removal; and
   sending, by the fourth node, the new path information to a next-hop node of the fourth node.

21. The method according to claim 17 or 18, wherein
the path information indicates a next-hop node of the fourth node.

22. A communication method, comprising:

   receiving, by a third node, a second request from a first node and an updated first model of the first node, wherein the third node is a control node of a node set associated with the first node, and the second request is used to request to forward the updated first model of the first node;
   obtaining, by the third node, node information of one or more fourth nodes, wherein the fourth node is a node in the node set;
   determining, by the third node, a next-hop node based on the node information of the one or more fourth nodes; and
   sending, by the third node, the updated first model of the first node to the next-hop node.

23. The method according to claim 22, wherein
the node information comprises one or more of the following: first indication information, degree information, data distribution information, computing power information, and channel state information, wherein the first indication information indicates whether a node is traversed.

24. The method according to claim 22, wherein before obtaining, by the third node, the node information of the one or more fourth nodes, the method further comprises:
sending, by the third node, a first request to the one or more fourth nodes, wherein the first request is used to request to obtain the node information.

25. The method according to claim 24, wherein
the first request comprises event information, and the event information indicates to update the first model.

26. The method according to claim 24 or 25, wherein
the first request further comprises a destination address of the first node.

27. A communication apparatus, comprising:

a transceiver module, configured to send a first request, wherein the first request is used to request node information of one or more nodes, and the one or more nodes are nodes in a node set associated with a first node, wherein
the transceiver module is further configured to obtain the node information of the one or more nodes; and
a processing module, configured to determine a next-hop node of the first node from the one or more nodes based on the node information, wherein
the transceiver module is further configured to send an updated first model of the first node to the next-hop node.

28. The apparatus according to claim 27, wherein the transceiver module is specifically configured to:

send the first request to one or more second nodes, wherein the second node is a neighboring node of the first node in the node set; and
receive node information from the one or more second nodes.

29. The apparatus according to claim 27, wherein the transceiver module is specifically configured to:

send the first request to a third node, wherein the third node is a control node of the node set;
and
receive node information from one or more fourth nodes, wherein the fourth node is a node in the node set.

30. The apparatus according to claim 29, wherein

the transceiver module is specifically configured to: if a second node meets a first condition, send the first request to the third node, wherein
the second node is a neighboring node of the first node in the node set, and the first condition comprises one or more of the following: being traversed, a data distribution correlation with the first node is less than or equal to a first threshold, a distance to the first node is greater than or equal to a second threshold, a power for connection to the first node is less than or equal to a third threshold, and a computing power is less than or equal to a fourth threshold.

31. The apparatus according to any one of claims 27 to 30, wherein
the first request comprises event information, and the event information indicates to update the first model.

32. The apparatus according to any one of claims 27 to 31, wherein
the first request further comprises a destination address of the first node.

33. The apparatus according to any one of claims 27 to 32, wherein
the node information comprises one or more of the following: first indication information, degree information, data distribution information, computing power information, and channel state information, wherein the first indication information indicates whether a node is traversed.

34. The apparatus according to any one of claims 27 to 33, wherein

the next-hop node is a node that is not traversed in the one or more nodes;
the next-hop node is a node having a highest data distribution correlation with the first node in the one or more nodes;

the next-hop node is a node closest to the first node in the one or more nodes;

the next-hop node is a node connected to the first node at a highest power in the one or more nodes;

the next-hop node is a node with a highest computing power in the one or more nodes; or

the next-hop node is any one of the one or more nodes.

**35.** A communication apparatus, comprising:

a transceiver module, configured to receive a first request from a first node, wherein a third node is a control node in a node set associated with the first node, the first request is used to request node information of one or more nodes, the one or more nodes are nodes in the node set, and the node information is used by the first node to determine a next-hop node of the first node, wherein

the transceiver module is further configured to send the first request to one or more fourth nodes, wherein the fourth node is a node in the node set.

**36.** The apparatus according to claim 35, wherein

the first request comprises event information, and the event information indicates to update a first model.

**37.** The apparatus according to claim 35 or 36, wherein

the first request further comprises a destination address of the first node.

**38.** The apparatus according to any one of claims 35 to 37, wherein

the node information comprises one or more of the following: first indication information, degree information, data distribution information, computing power information, and channel state information, wherein the first indication information indicates whether a node is traversed.

**39.** A communication apparatus, comprising:

a transceiver module, configured to obtain node information of a plurality of nodes in a node set, wherein a third node is a control node in the node set; and

a processing module, configured to determine a transmission path based on the node information of the plurality of nodes, wherein

the transceiver module is further configured to send path information to a node associated with the transmission path, wherein the path information indicates the transmission path.

**40.** The apparatus according to claim 39, wherein

the node information comprises one or more of the following: first indication information, degree information, data distribution information, computing power information, and channel state information, wherein the first indication information indicates whether a node is traversed.

**41.** The apparatus according to claim 39 or 40, wherein

the transceiver module is specifically configured to send the path information to a $1^{st}$ node of the transmission path, wherein the path information indicates each node associated with the transmission path and a next-hop node of each node.

**42.** The apparatus according to claim 39 or 40, wherein

the transceiver module is specifically configured to send the path information to each node associated with the transmission path, wherein the path information indicates a next-hop node of a node associated with the path information.

**43.** A communication apparatus, comprising:

a transceiver module, configured to send node information to a third node, wherein a fourth node is a node in a node set, and the third node is a control node of the node set, wherein

the transceiver module is further configured to receive path information from the third node, wherein the path information indicates a transmission path, and the transmission path is determined based on the node information.

**44.** The apparatus according to claim 43, wherein
the node information comprises one or more of the following: first indication information, degree information, data distribution information, computing power information, and channel state information, wherein the first indication information indicates whether a node is traversed.

**45.** The apparatus according to claim 43 or 44, wherein
if the fourth node is a 1st node of the transmission path, the path information indicates each node associated with the transmission path and a next-hop node of each node.

**46.** The apparatus according to claim 45, wherein

a processing module is configured to remove information associated with the fourth node from the path information, to obtain new path information, wherein the new path information is obtained through the removal; and
the transceiver module is further configured to send the new path information to a next-hop node of the fourth node.

**47.** The apparatus according to claim 43 or 44, wherein
the path information indicates a next-hop node of the fourth node.

**48.** A communication apparatus, comprising:

a transceiver module, configured to receive a second request from a first node and an updated first model of the first node, wherein a third node is a control node in a node set associated with the first node, and the second request is used to request to forward the updated first model of the first node, wherein
the transceiver module is further configured to obtain node information of one or more fourth nodes, wherein the fourth node is a node in the node set; and
a processing module, configured to determine a next-hop node based on the node information of the one or more fourth nodes, wherein
the transceiver module is further configured to send the updated first model of the first node to the next-hop node.

**49.** The apparatus according to claim 48, wherein
the node information comprises one or more of the following: first indication information, degree information, data distribution information, computing power information, and channel state information, wherein the first indication information indicates whether a node is traversed.

**50.** The apparatus according to claim 48, wherein
the transceiver module is further configured to send a first request to the one or more fourth nodes, wherein the first request is used to request to obtain the node information.

**51.** The apparatus according to claim 50, wherein
the first request comprises event information, and the event information indicates to update the first model.

**52.** The apparatus according to claim 50 or 51, wherein
the first request further comprises a destination address of the first node.

**53.** A communication apparatus, wherein the communication apparatus comprises a processor, and the processor is configured to run a computer program or instructions, to enable the communication apparatus to perform the communication method according to any one of claims 1 to 8, perform the communication method according to any one of claims 9 to 12, perform the communication method according to any one of claims 13 to 16, perform the communication method according to any one of claims 17 to 21, or perform the communication method according to any one of claims 22 to 26.

**54.** A computer-readable storage medium, wherein the computer-readable storage medium stores computer instructions or a program, and when the computer instructions or the program is run on a computer, the communication method according to any one of claims 1 to 8 is enabled to be performed, the communication method according to any one of claims 9 to 12 is enabled to be performed, the communication method according to any one of claims 13 to 16 is enabled to be performed, the communication method according to any one of claims 17 to 21 is enabled to be performed, or the communication method according to any one of claims 22 to 26 is enabled to be performed.

55. A computer program product, wherein the computer program product comprises computer instructions, and when a part or all of the computer instructions are run on a computer, the communication method according to any one of claims 1 to 8 is enabled to be performed, the communication method according to any one of claims 9 to 12 is enabled to be performed, the communication method according to any one of claims 13 to 16 is enabled to be performed, the communication method according to any one of claims 17 to 21 is enabled to be performed, or the communication method according to any one of claims 22 to 26 is enabled to be performed.

56. A communication system, wherein the communication system comprises a first node and a node in a node set, wherein

the first node is configured to send a first request, wherein the first request is used to request node information of one or more nodes, and the one or more nodes are nodes in the node set associated with the first node;
the first node is further configured to obtain the node information of the one or more nodes;
the node in the node set is configured to send the node information to the first node;
the first node is further configured to determine a next-hop node of the first node from the one or more nodes based on the node information; and
the first node is further configured to send an updated first model of the first node to the next-hop node.

57. The system according to claim 56, wherein the node in the node set is a second node;

the first node is specifically configured to: send the first request to one or more second nodes, and receive node information from the one or more second nodes, wherein the second node is a neighboring node of the first node in the node set; and
the second node is configured to: receive the first request from the first node, and send the node information to the first node.

58. The system according to claim 56, wherein the communication system further comprises a third node;

the first node is specifically configured to send the first request to the third node, wherein the third node is a control node of the node set;
the third node is configured to: receive the first request from the first node, and send the first request to one or more fourth nodes, wherein the fourth node is a node in the node set;
the fourth node is configured to: receive the first request from the third node, and send the node information to the first node; and
the first node is further configured to receive the node information from the one or more fourth nodes.

59. The system according to claim 58, wherein

the first node is specifically configured to: if a second node meets a first condition, send the first request to the third node, wherein
the second node is a neighboring node of the first node in the node set, and the first condition comprises one or more of the following: being traversed, a data distribution correlation with the first node is less than or equal to a first threshold, a distance to the first node is greater than or equal to a second threshold, a power for connection to the first node is less than or equal to a third threshold, and a computing power is less than or equal to a fourth threshold.

60. The system according to any one of claims 56 to 59, wherein
the first request comprises event information, and the event information indicates to update the first model.

61. The system according to any one of claims 56 to 60, wherein
the first request further comprises a destination address of the first node.

62. The system according to any one of claims 56 to 61, wherein
the node information comprises one or more of the following: first indication information, degree information, data distribution information, computing power information, and channel state information, wherein the first indication information indicates whether a node is traversed.

**63.** The system according to any one of claims 56 to 62, wherein

the next-hop node is a node that is not traversed in the one or more nodes;
the next-hop node is a node having a highest data distribution correlation with the first node in the one or more nodes;
the next-hop node is a node closest to the first node in the one or more nodes;
the next-hop node is a node connected to the first node at a highest power in the one or more nodes;
the next-hop node is a node with a highest computing power in the one or more nodes; or
the next-hop node is any one of the one or more nodes.

**64.** A communication system, comprising a third node and a node in a node set, wherein

the node in the node set is configured to send node information to the third node, wherein the third node is a control node of the node set;
the third node is configured to: obtain the node information of a plurality of nodes in the node set, determine a transmission path based on the node information of the plurality of nodes, and send path information to a node associated with the transmission path, wherein the path information indicates the transmission path, the node associated with the transmission path is a fourth node, and the fourth node is a node in the node set; and
the fourth node is configured to receive the path information from the third node.

**65.** The system according to claim 64, wherein
the node information comprises one or more of the following: first indication information, degree information, data distribution information, computing power information, and channel state information, wherein the first indication information indicates whether a node is traversed.

**66.** The system according to claim 64 or 65, wherein

the third node is specifically configured to send the path information to a $1^{st}$ node of the transmission path, wherein the path information indicates each node associated with the transmission path and a next-hop node of each node; and
the fourth node is configured to: if the fourth node is the $1^{st}$ node of the transmission path, receive, by the fourth node, the path information from the third node.

**67.** The system according to claim 66, wherein
the fourth node is further configured to: remove information associated with the fourth node from the path information, to obtain new path information, wherein the new path information is obtained through the removal; and send the new path information to a next-hop node of the fourth node.

**68.** The system according to claim 64 or 65, wherein

the third node is specifically configured to send the path information to each node associated with the transmission path, wherein the path information indicates a next-hop node of a node associated with the path information; and
the fourth node is configured to receive the path information from the third node.

**69.** A communication system, comprising a first node, a third node, and a fourth node, wherein

the first node is configured to send a second request and an updated first model of the first node to the third node, wherein the third node is a control node of a node set associated with the first node, and the second request is used to request to forward the updated first model of the first node;
the third node is configured to receive the second request from the first node and the updated first model of the first node, and the third node is further configured to: obtain node information of one or more fourth nodes, determine a next-hop node based on the node information of the one or more fourth nodes, and send the updated first model of the first node to the next-hop node, wherein the fourth node is a node in the node set; and
the fourth node is configured to send the node information to the third node.

**70.** The system according to claim 69, wherein
the node information comprises one or more of the following: first indication information, degree information, data distribution information, computing power information, and channel state information, wherein the first indication information indicates whether a node is traversed.

71. The system according to claim 69, wherein before the third node obtains the node information of the one or more fourth nodes, the third node is further configured to send a first request to the one or more fourth nodes, wherein the first request is used to request to obtain the node information.

72. The system according to claim 71, wherein
the first request comprises event information, and the event information indicates to update the first model.

73. The system according to claim 71 or 72, wherein
the first request further comprises a destination address of the first node.

FIG. 1a

FIG. 1b

200

Processor — 201

CPU 0

CPU 1

Processor — 207

CPU 0

CPU 1

Memory — 204

Communication
line 203

Transceiver — 202

Output device — 205

Input device — 206

FIG. 2

First node

Node

Node

...

Node
(next-hop node)

301: Send a first request

302: Obtain node
information

302: Obtain node information

...

302: Obtain node information

303: Determine a next-hop node of
the first node from the one or more
nodes based on the node information

304: Send an updated first model of the first node

FIG. 3

| First node | Second node | Second node | ... | Second node |

401: Send a first request

401: Send the first request

...

401: Send the first request

402: Send node information

402: Send node information

...

402: Send node information

FIG. 4

| First node | Third node | Fourth node | ... | Fourth node |

501: Send a first request

502: Send the first request

...

502: Send the first request

503: Send node information

...

503: Send node information

FIG. 5

| Third node | Node (1st node) | Node | ... | Node |
|---|---|---|---|---|

Next-hop node of the 1st node

601a: Send a first request

601a: Send a first request

...

601a: Send a first request

601: Obtain node information of a plurality of nodes in a node set

602: Determine a transmission path based on the node information of the plurality of nodes

603: Send path information to a node associated with the transmission path

603a: Send the path information to the 1st node of the transmission path

604: Remove information associated with the 1st node from the path information, to obtain new path information, where the new path information is obtained through the removal

605: Send the new path information to the next-hop node of the 1st node

603b: Send the path information to each node associated with the transmission path

603b: Send the path information to each node associated with the transmission path

FIG. 6

First node | Third node | Next-hop node

701: Send a second request and an updated first model of the first node

702: Obtain node information of one or more fourth nodes

703: Determine the next-hop node based on the node information of the one or more fourth nodes

704: Send the updated first model of the first node

FIG. 7

Communication apparatus 80

Transceiver module 801

Processing module 802

FIG. 8

Communication apparatus 90

Logic circuit 901

Interface circuit 902

Memory 903

FIG. 9

## INTERNATIONAL SEARCH REPORT

| International application No. |
| --- |
| **PCT/CN2023/071948** |

| A. | CLASSIFICATION OF SUBJECT MATTER |
| --- | --- |

H04L45/02(2022.01)i; G06N20/00(2019.01)i; H04W40/00(2009.01)i

According to International Patent Classification (IPC) or to both national classification and IPC

| B. | FIELDS SEARCHED |
| --- | --- |

Minimum documentation searched (classification system followed by classification symbols)

IPC:H04L45/-,G06N20/-,H04W40/-

Documentation searched other than minimum documentation to the extent that such documents are included in the fields searched

Electronic data base consulted during the international search (name of data base and, where practicable, search terms used)

CNTXT, ENTXTC, WPABSC, CNKI: 传输, 发送, 接收, 下一跳, 路径, 节点, AI, 人工智能, 模型, 迭代, 更新, 升级; VEN, ENTXT, WPABS, 3GPP: transmit, send, receive, next hop, path, node, AI, artificial intelligence, model, iteration, update, upgrade

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2022160108 A1 (HUAWEI TECHNOLOGIES CO., LTD.) 04 August 2022 (2022-08-04) claim 1, and description, page 7 lines 12-15 | 1-73 |
| Y | CN 111612153 A (HUAWEI TECHNOLOGIES CO., LTD.) 01 September 2020 (2020-09-01) description, paragraphs 117-120 and 151 | 1-73 |
| A | CN 106506275 A (INSTITUTE OF COMPUTING TECHNOLOGY, CHINESE ACADEMY OF SCIENCES et al.) 15 March 2017 (2017-03-15) entire document | 1-73 |
| A | US 2023007564 A1 (QUALCOMM INC.) 05 January 2023 (2023-01-05) entire document | 1-73 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2023** | **22 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/071948**

| Patent document cited in search report | | | Publication date (day/month/year) | Patent family member(s) | | | Publication date (day/month/year) |
|---|---|---|---|---|---|---|---|
| WO | 2022160108 | A1 | 04 August 2022 | None | | | |
| CN | 111612153 | A | 01 September 2020 | WO | 2020168761 | A1 | 27 August 2020 |
| CN | 106506275 | A | 15 March 2017 | CN | 106506275 | B | 20 August 2019 |
| US | 2023007564 | A1 | 05 January 2023 | WO | 2023279043 | A2 | 05 January 2023 |
| | | | | WO | 2023279043 | A3 | 23 February 2023 |

Form PCT/ISA/210 (patent family annex) (July 2022)